# EUROPÄISCHE PATENTANMELDUNG

(11) **EP 0 574 954 A2**
(43) Veröffentlichungstag der Anmeldung: **22.12.1993**
(21) Anmeldenummer: 93109890.9
(22) Anmeldetag: 21.06.1993
(51) Int. Cl.: F24J 2/34

(54) **Solarer Warmwasserbereiter mit integriertem Speicher**

(30) Priorität: 19.06.1992 CH 1933/92
(71) Anmelder: KLAUS HERRMANN AKTIENGESELLSCHAFT, D-58239 Schwerte (DE)
(72) Erfinder: Leibfried, Ulrich Hans-Karl, D-7850 Lörrach (DE); Kleinwächter, Jürgen, D-7842 Kandern (DE)
(74) Vertreter: Kinzebach, Werner, Dr.

(57) **Zusammenfassung**

Die Erfindung betrifft einen solaren Warmwasserbereiter mit integriertem Speicher (6), der isotherm mit Wasser frei wählbarer Temperatur befüllbar ist und bei vollem Tank in die Betriebsweise einer Thermosiphonanlage übergeht. Kollektor und Speicher sind kompakt in einer flachen Einheit untergebracht und können aufgrund des drucklosen Betriebs leicht und kostengünstig aufgebaut werden.

Zwei Prinzipien der solaren Warmwasserbereitung kommen kombiniert zur Wirkung: Primär wird Kaltwasser direkt während einer Durchströmung des Absorbers (5) auf die gewünschte Endtemperatur aufgeheizt, woraus sich gute Kollektor-Wirkungsgrade und eine schnelle Verfügbarkeit ergeben. Ist der Speicher (6) voll, setzt automatisch ein Thermosiphonkreislauf ein, der den Speicherinhalt weiter aufheizt und/oder dessen Wärmeverluste kompensiert.

## Beschreibung

Die solare Warmwasserbereitung kann einen bedeutenden Beitrag zur Schonung der Umwelt und Einsparung fossiler Ressourcen leisten.

Voraussetzung sind gut funktionierende, robuste, möglichst passiv (ohne Hilfsenergie) arbeitende Systeme. Hier haben sich in letzter Zeit immer mehr solare Warmwasserbereiter mit direkt angekoppeltem Speicher am Markt durchgesetzt. Es sind dies im Wesentlichen:
- Thermosiphon-Anlagen
- Systeme, bei denen ein Absorber für Sonnenenergie und ein Tank eine Einheit bilden.

Diese Systeme weisen bezüglich ihrer Effizienz den Nachteil auf, daß es sich in den meisten Fällen um Mischspeicher handelt, bei denen die Temperatur des gesamten Wassers im Speicher mehr oder weniger gleichmäßig angehoben wird. Um als Warmwasserbereiter verfügbar zu sein, muß die Temperatur immer über einem Mindestwert liegen. Wird Warmwasser entnommen, so wird die entsprechende Menge an Kaltwasser dem Warmwasser zugemischt. Die Nachteile, die sich hieraus ergeben, sind:
- Relativ hohe Absorbereinlauftemperaturen und dadurch hohe Wärmeverluste.
- Nach einer vollständigen Speicherentladung ist Warmwasser erst nach einer relativ langen Aufheizphase verfügbar.

Gelegentlich werden zur Vermeidung dieser Nachteile Schichtspeicher in Verbindung mit Thermosiphonanlagen eingesetzt. Diese Systeme sind allerdings nicht mehr kompakt darstellbar, sind hinsichtlich Konstruktion und Montage aufwendiger, und weisen trotzdem einen gewissen Temperaturausgleich (und damit Entropieerzeugung) auf.

Ein weiterer Nachteil von Thermosiphonanlagen ist ihre mangelnde Ästhetik durch den aufgesetzten und als solches sichtbaren Tank.

Dieser Nachteil wird bei integrierten Absorber-Tank-Einheiten (sogenannte Speicherkollektoren) umgangen. Sie können allgemein folgendermaßen beschrieben werden: Das Wasser befindet sich in einem gut isolierten Speicher. Dieser ist an seiner Sonnenseite durch eine Absorberwand begrenzt. Diese wiederum ist zur Sonnenseite hin mit einer oder mehreren transparenten Schichten (transparente Isolation) abgedeckt. Die einfallende Solarstrahlung erwärmt die Absorberwand und diese gibt einen Teil der Wärme an das darunter befindliche Speicherwasser ab und den anderen Teil durch Strahlung, Leitung und Konvektion durch die transparente Wärmedämmung an die Umgebung.

Hier besteht das Problem, daß die transparente Abdeckung einerseit sehr gut isolierend sein muß, um starke nächtliche Abkühlungen zu vermeiden, andererseits eine hohe Transparenz aufweisen muß. die heute verfügbaren transparenten Wärmedämmungen stellen diesbezüglich entweder einen unbefriedigenden Kompromiß dar, oder sie sind relativ teuer.

Ein Speicherkollektor, der die Probleme der überhöhten Speichertemperaturen gelöst hat, ist in dem europäischen Patent 0 219 566 vom 22. 10. 1985 beschrieben. Es handelt sich dabei um einen Speicher mit variablem Volumen, dem thermostatisch Kaltwasser so beigemischt wird, daß die Wassertemperaturen immer annähernd konstant bleiben. Allerdings wird auch hier durch die Kaltwasser-Beimischung Entropie erzeugt, was sich in - der Speichertemperatur entsprechenden - unnötig hohen Wärmeverlusten auswirkt.

Ein Speicherkollektor, der die erwähnten Nachteile nicht besitzt, ist in der deutschen Patentanmeldung PA 37 28 551.3 beschrieben. Dabei ist der topologische Aufbau fast identisch zu einem herkömmlichen Speicherkollektor. Der wesentliche Unterschied besteht darin, daß zwischen dem auf der Sonnenseite angeordneten Kollektor und dem darunter befindlichen Speicher eine Wärmedämmschicht angebracht ist. Der Wärmetransport kann also nicht mehr direkt durch die Wand ins Speicherwasser erfolgen, sondern durch eine kleine Zirkulationspumpe, die das Wasser, das im Tank eine Temperaturschichtung aufweisen soll, aus dem unteren kälteren Bereich in den Absorber leitet, von wo es nach Erreichen einer gewünschten Temperatur laminar in den Speicher oben eingeschichtet wird.

Ein solcher Speicherkollektor hat kompakten Aufbau, eine gute Wärmedämmung für den Speicherteil und gute Absorbereigenschaften. Er besitzt jedoch zwei wesentliche Nachteile: Eine stabile Temperaturschichtung als Voraussetzung für schnelle Verfügbarkeit und geringe Wärmeverluste des Absorbers ist wegen der flachen Bauweise ohne Zusatzmaßnahmen nicht realisierbar. Zweitens kann das System nicht passiv betrieben werden.

Die vorliegende Erfindung eines solaren Warmwasserbereiters mit integriertem Speicher und Absorber beseitigt die geschilderten Nachteile des vorgenannten Speicherkollektors und optimiert zusätzlich den Modus der Einspeicherung des erwärmten Wassers in der Weise, daß die Entropieerzeugung minimiert wird.

Dazu wird erfindungsgemäß der ebenfalls vom wärmeisolierten Speicher durch eine Wärmedämmschicht getrennte Absorber so angeordnet, daß sich der Absorbereinlauf auf niedrigerem Niveau als der Auslauf befindet, letzterer unterhalb des höchsten Punktes des Speichers in diesen geführt wird.

In dem Absorber wird das zu erwärmende Wasser während einer Durchströmung des Absorbers direkt von der Kaltwasser-Zulauftemperatur auf die Endtemperatur gebracht, ohne weitere Zirkulation ("einmal durch"-Prinzip). Eine hilfsnergielose Thermostatregelung ermöglicht die isotherme Beladung des anfangs leeren Speichers mit Wasser der gewünschten Temperatur, wobei der Kaltwasserzulauf über Niveauregler und Ventile direkt mit dem Absorbereinlauf verbindbar ist.

Ist jedoch der Speichertank auf diese Weise gefüllt, stellen die Wasservolumina des Speichers und des Absorbers ein vollständig kommunizierendes Wassersystem geringen Strömungswiderstandes dar. In dem Absorber steigt das durch die Solarstrahlung über die Speichertemperatur erwärmte Wasser auf und regt dadurch eine Schwerkraftzirkulation (Thermosiphon) an, die den Speicher weiter aufheizt, beziehungsweise dessen Wärmeverluste kompensiert. Hierdurch kann ein Überangebot an Solarenergie noch weiter durch Temperaturerhöhung gespeichert werden. Außerdem wird ein Auskühlen des Warmwassertanks bei längerer Nichtentnahme vermieden.

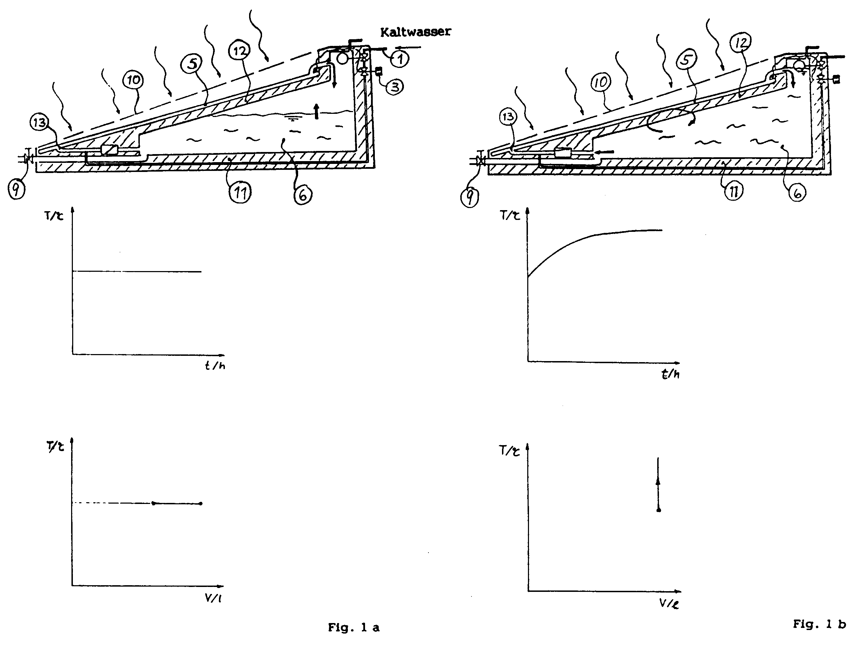

In Figur 1 a) und b) ist die geschilderte Funktionsweise schematisch dargestellt.

In 1 a) wird der Speicher (6) isotherm bei wählbarer Temperatur mit Wasser, das während einer Durchströmung des Absorbers (5) erwärmt wurde, gefüllt. Wärme wird durch Volumen- bzw. Massenzunahme des Speichermediums (Wasser) gespeichert. In Figur 1 b) ist der Speicher (6) gefüllt, so daß bei weiterer Sonneneinstrahlung der Thermosiphonkreislauf einsetzt, und Wärme über eine Erhöhung der Speicherwassertemperatur gespeichert wird.

Die erfindungsgemäße Kombination dieser beiden Funktionsweisen führt zu entscheidenden Vorteilen gegenüber herkömmlichen Speicherkollektoren oder Thermosiphonanlagen bei gleichzeitiger Wahrung des einfachen kompakten Aufbaus und ohne Zuhilfenahme von Fremdenergie:
- Isotherme Beladung des Speichers bei frei wählbarer Temperatur
- Schnelle Verfügbarkeit der Anlage schon nach kurzer Einstrahlung
- Gute Kollektorwirkungsgrade wegen einer tiefen Einlauf-Temperatur
- Geringere Wärmeverluste des Speichers, als bei Speicherung der gleichen Wärmemenge über Temperaturerhöhung (Verluste ungefähr proportional zur Temperaturdifferenz zur Umgebung bei Vernachlässigung der Strahlung, aber nur proportional zum Volumen hoch 2/3). Dies gilt insbesondere bei einem Speicher mit variablem Volumen, s.u.. Der Speicher kann daher größer als bei herkömmlichen Solaranlagen dimensioniert werden, und so auch große Wärmemengen effektiv speichern.

Durch die erfindungsgemäße Herabsetzung des Wasserdrucks bereits direkt hinter dem Anschluß an das Wasserleitungsnetz muß kein darauffolgendes Bauteil auf einen höheren Druck ausgelegt werden, als durch die im Absorber stehende Wassersäule verursacht wird. Dies bringt Vorteile hinsichtlich der Kosten, die sich aus verringerten Wandstärken und der damit verbundenen Materialersparnis ergeben. Darüberhinaus wird es möglich, andere Werkstoffe wie insbesondere Kunststoffe einzusetzen, woraus Korrosionsfreiheit und geringes Leergewicht resultieren.

Bei Einsatz der Erfindung in sonnenreichen Ländern, wie z.B. Südeuropa oder Afrika, stellt die Drucklosigkeit in vielen Fällen keinen Nachteil dar, da sich auf Dächern in südlichen Ländern oft Wasserspeicher befinden, die den Leitungsdruck ebenfalls durch ihre Höhe oberhalb des Verbrauchers bestimmen. Für diejenigen Haushalte, indenen der Leitungsdruck der Wasserversorgung höher liegt, kann eine zusätzliche Pumpe hinter dem Absorber für eine Mischbarkeit mit dem Kaltwasser sorgen.

Der erfindungsgemäß integrierte Wärmespeicher ermöglicht in Verbindung mit einem geringen Gewicht den einfachen Transport zum Einsatzort. Die Kosten für die Verbindung vom Absorber zum Wärmespeicher werden auf ein Mindestmaß reduziert. Die Wärmedämmung von Absorber und Warmwasserspeicher kann von beiden Bauelementen gleichzeitig genutzt werden, was eine Reduktion der Kosten und Energieverluste und einen verminderten Platzbedarf gegenüber getrennten Systemen bedeutet.

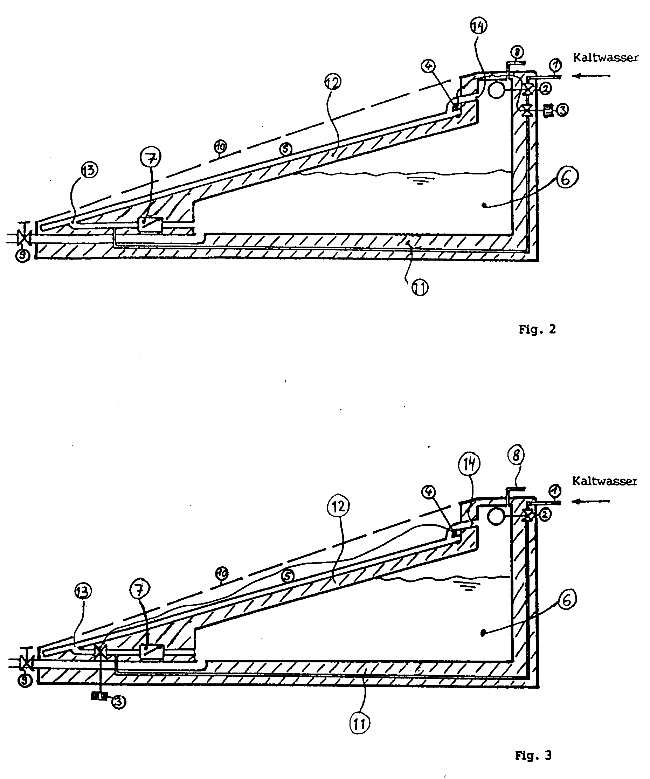

In Figur 2 ist ein Beispiel der Erfindung dargestellt: Kaltwasser strömt durch den Wasseranschluß (1) in das Gerät und wird durch das Niveauregelventil (2) und das thermostatisch geregelte Kühlventil (3) geleitet bevor es in den Absorber (5) eintritt, der sich unter einer transparenten Abdeckung (10) befindet. Der Absorber (5) ist so angeordnet, daß sich das Niveau des Absorbereinlaufs (13) unterhalb des Niveaus des Auslaufes (14) befindet (z.B. auf der Höhe des Tankbodens), und der Auslauf (14) unterhalb des höchsten Punktes des Speichers in den Speicher bzw. Tank (6) geführt wird. in der Nähe des Absorberauslaufs (14) ist der Fühler (4) des Thermostatreglers angebracht. Er drosselt über das Kühlventil (3) den Druck und damit den Wasserstrom so, daß am Absorberauslauf gerade die gewünschte, entweder fest vorgegebene oder einstellbare Temperatur erreicht wird. Auf diese Weise wird der Tank (6) mit Wasser nahezu konstanter Temperatur beladen.

Ist der Tank (6) voll, so daß sein Wasserniveau mindestens auf der Höhe des Absorberauslaufes liegt, so schließt das Niveauregelventil (2) (z.B. wird der Schwimmkörper eines Schwimmerventils hochgehoben und schließt dadurch das Ventil). Da das Wasser im Tank (6) nun mit dem Wasser im Absorber (5) oben über den Absorberauslauf (14) und unten über den Rückflußverhinderer (7) kommuniziert, kann ein Thermosiphonkreislauf einsetzen.

Durch den Rückflußverhinderer (7) wird vermieden, daß Kaltwasser direkt in den Speicher (6) eintritt, und daß nachts, bei einer Abkühlung des Absorbers (5) und bei vollem Tank (6) eine Zirkulation in umgekehrte Richtung einsetzt.

Die an der höchsten Stelle des Tanks (6) angebrachte Entlüftung (8) sorgt dafür, daß im Absorber (5) aus dem Wasser austretende Gase abgeführt werden, und daß bei Befüllung oder Entleerung des Tanks (6) Luft ab- bzw. zuströmen kann.

Tank (6) sowie Unterseite des Absorbers sind isoliert (11). Warmwasser kann über den am tiefsten Punkt des Tanks angebrachten Auslauf (9) entnommen werden.

Eine erfindungsgemäße Variante ist in Figur 3 dargestellt:
Das Thermostatventil (3) wird direkt vor den Absorbereinlauf (13) in die Verbindungsleitung zwischen Speicher (6) und Absorber (5) eingebaut. Dadurch wird der Rückflußverhinderer (6) druckbeaufschlagt und erfüllt seine Dichtfunktion während des Befüllungsvorgangs des Tanks (6) besser.

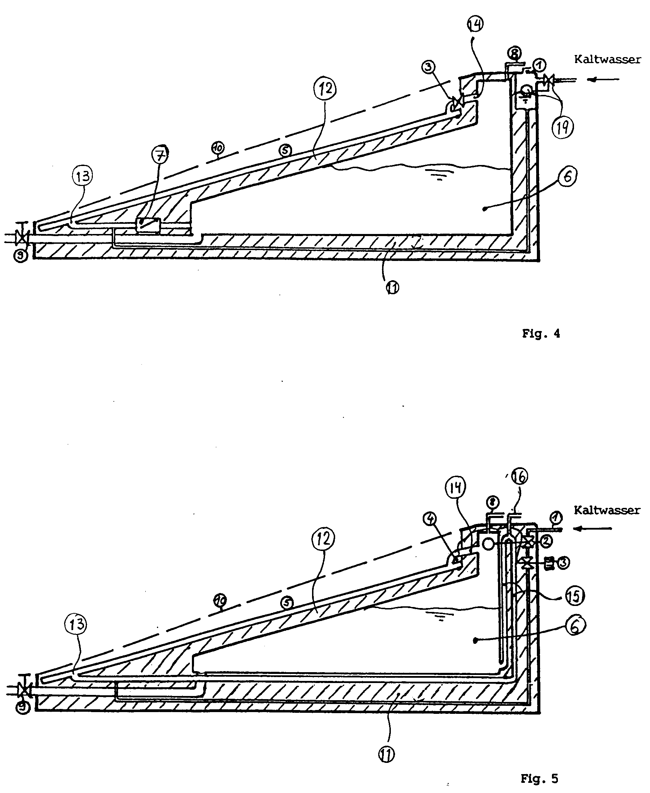

Eine weitere Variante ist in Figur 4 dargestellt:
Das Thermostatventil (3) wird am Absorberauslauf (14) angebracht. Dadurch sind kostengünstigere Ventile mit internem Fühler einsetzbar. Voraussetzung hierfür ist entweder ein druckbelastbarer Absorber (5) oder eine Druckreduzierung am Kaltwassereinlauf (1). Wird die Druckreduzierung in Form eines Niveaureglers (2) wie in Figur 4 dargestellt realisiert, der das Wasserniveau immer unter dem Entlüftungsniveau (8) hält, kann auf den im Tank (6) eingebauten Niveauregler verzichtet werden. Der vorgeschaltete Niveauregler kann ebenso durch ein in einem nach oben offenen Wasservolumen angebrachtes Schwimmerventil realisiert werden.

Eine weitere Variante ist in Figur 5 dargestellt:
Statt eines Rückflußverhinderers (7) kann ein mit einer Entlüftung (16) versehener Überlauf (15) zwischen Tank (14) und Absorbereinlauf (16), der über dem Absorberauslauf (13) und unter dem Schaltniveau des Niveaureglers (2) liegen muß, verhindern, daß kaltes Wasser direkt in den Tank (6) einströmt. Allerdings wird hierdurch nicht eine nächtliche Zirkulationsumkehrung verhindert und es sind längere Verbindungsleitungen erforderlich (Druckverlust).

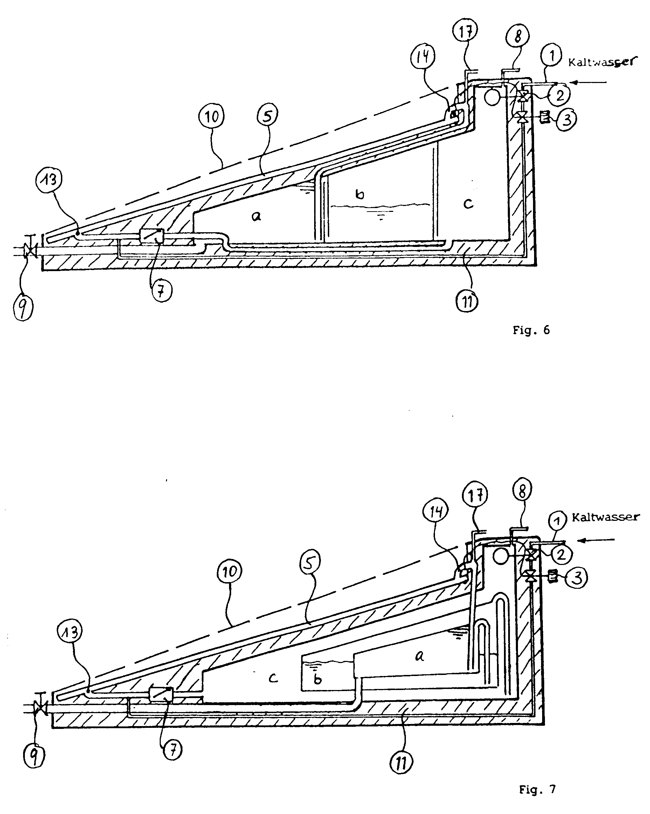

Zur Reduzierung der Wärmeverluste des Speichers im teilbeladenen Zustand kann erfindungsgemäß durch verschiedene Maßnahmen ein variables, dem Füllungsgrad (annähernd) entsprechendes Tankvolumen erreicht werden:
a) Horizontale Unterteilung des Tanks in zwei oder mehrere Untertanks (Figur 6). Durch eine Siphonverschaltung wird erreicht, daß die Tanks in der Reihenfolge (a), (b), (c)... befüllt und in der umgekehrten Reihenfolge entleert werden. Der Anschluß an den Absorbereinlauf (13) erfolgt am letzten Tank (C).
b) Ein noch etwas besserer Effekt wird erfindungsgemäß durch ein Ineinanderschachteln der Tanks (Figur 7) erreicht. Hierbei können erfindungsgemäß im inneren Bereich auch Formen mit besserem Volumen-Oberflächenverhältnis (z.B. Kugel) verwirklicht werden. Der Anschluß an den Absorbereinlauf (13) erfolgt auch hier am letzten Tank (C). Eine Siphonschaltung bewirkt, daß die Tanks (a, b..) nacheinander befüllbar und in umgekehrter Reihenfolge entleerbar sind. In beiden Fällen (horizontale Tankunterteilung und Ineinanderschachtelung) muß der Absorberauslauf (14) mit einer Entlüftung (17) versehen werden.
c) Ein sackförmiger Tank, der sich beim Befüllen aufbläht und beim Entleeren zusammenfällt, erfüllt erfindungsgemäß ebenfalls die Aufgabe eines variabel sich anpasenden Tankvolumens. Der Niveauregler ist ortsfest wie bei der Grundversion der Erfindung montiert.

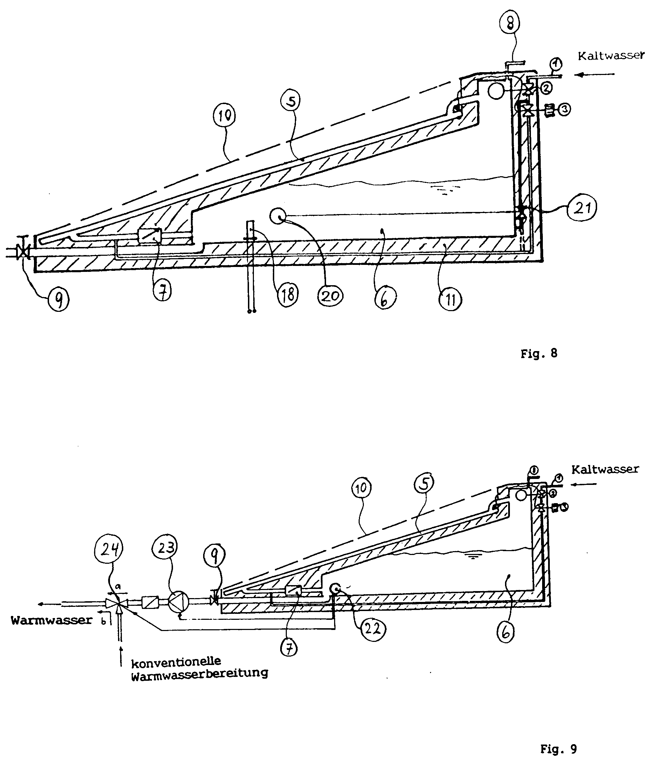

Erfindungsgemäß kann eine Nachheizung des Wassers bei ungenügender Sonneneinstrahlung folgendermaßen realisiert werden:
a) Elektrische Nachheizung eines im Tank (6) immer verbleibenden Mindestvolumens (Figur 8): Sinkt das Wasser im Tank (6) unter ein bestimmtes Niveau ab, so öffnet der Niveauregler (2) ein Ventil (z.B. ein Schwimmerventil) und läßt kaltes Wasser direkt, oder nach Durchlaufen des Absorbers (5) (gestrichelte Leitung in Figur 8) in den Tank (6) einströmen. In diesem Mindestwasservolumen ist eine elektrische Heizpatrone (18) angebracht, die, thermostatisch geregelt, das Wasser im Tank (6) nie unter eine Mindsttemperatur absinken läßt. Statt der elektrischen Heizpatrone (18) kann auch eine andere Wärmequelle (z.B. ein Wärmetauscher) eingesetzt werden. Das Mindestvolumen kann erfindungsgemäß mit einer oder mehreren der oben beschriebenen Tankkammern zusammenfallen.
b) Ein hinter dem Warmwasserauslauf (9) des Geräts angebrachter, vorzugsweise thermostatisch geregelter Durchlauferhitzer oder ein konventioneller Warmwasserspeicher heizt das Wasser auf die gewünschte Endtemperatur nach. Ein im Tank (6) angebrachter Niveauwächter (22) bewirkt, daß bei leerem Tank (6) Kaltwasser direkt vom Kaltwassereinlauf (1, Figur 8) zum Warmwasserauslauf (9, Figur 8), bzw. hinter die Druckerhöhungspumpe (23) gelangen kann. Somit erfolgt keine Druckreduzierung, so daß in diesem Betriebsmodus (z.B. während der Wintermonate) auch bei einem Druck-Warmwassernetz keine Antriebsleistung für die Pumpe benötigt wird.
c) Eine andere erfindungsgemäße Möglichkeit der Kopplung mit einem zweiten (z.B. konventionellen) Warmwasserbereiter ist in Figur 9 dargestellt: Ein Niveauwächter (22) gibt Schaltsignale an einen Dreiwegehahn (24), eine eventuell eingesetzte Druckerhöhungspumpe (23) und die konventionelle Warmwasserbereitung. Bei nicht leerem Tank (6) des solaren Warmwasserbereiters ist der Hann (24) in Stellung a), bei leerem Tank (6) wird die eventuell eingesetzte Druckerhöhungspumpe (23) abgestellt, der Hahn (24) in Stellung b) gebracht und der konventionelle Warmwasserbereiter betrieben.

Erfindungsgemäß ist eine geneigte Montage des gesamten Gerätes prinzipiell möglich. Die Bauteile müssen für die höhere Druckbelastung ausgelegt werden, und Niveauregler sowie Rückflußverhinderer müssen so montiert werden, daß sie auch in geneigter Position des Gerätes funktionieren. Bei Anwendung der Nachheizung eines im Tank (6) verbleibenden Mindestvolumens muß der Meßfühler (20, Figur 8) im vorderen Bereich des Tanks (6) angebracht sein, damit sich auch in geneigter Stellung das gewünschte Mindestvolumen einstellt.

## Patentansprüche

1. Solarer Warmwasserbereiter mit integriertem Speicher und Absorber,
**dadurch gekennzeichnet,** daß der vom wärmeisolierten Speicher (6) durch eine Wärmedämmschicht (12) getrennte Absorber (5) so angeordnet ist, daß sich der Absorbereinlauf (13) auf niedrigerem Niveau als der Auslauf (14) befindet, letzterer unterhalb des höchsten Punktes des Speichers (6) in diesen geführt wird, wobei der Kaltwasserzulauf (1) thermostatisch geregelt direkt mit dem Absorbereinlauf (13) über Niveauregler und Ventile (2, 3) verbindbar ist, so daß das zu erwärmende Wasser während eines Durchgangs durch den Absorber (5) auf die gewünschte, fest vorgegebene und einstellbare Endtemperatur gebracht und der Speicher (6) isotherm befüllt wird,
daß nach Füllung des Speichers (6) dieser und der Absorber (5) ein vollständig kommunizierendes Wassersystem geringen Strömungswiderstandes darstellen, so daß bei weiterer Sonneneinstrahlung ein Thermosiphonkreislauf in Gang kommt, der den Speicher (6) weiter aufheizt, bzw. dessen Wärmeverluste kompensiert.

2. Solarer Warmwasserbereiter nach Anspruch 1,
dadurch gekennzeichnet, daß ein hinter dem Kaltwasserzulauf (1) angebrachtes, thermostatisch geregeltes Kühlventil (3), dessen Temperaturmeßfühler (4) in der Nähe des Absorber-Auslaufes (14) angebracht ist, den Wasserdruck und damit den Wasserstrom so drosselt, daß am Absorberauslauf (14) die gewünschte,
vorgegebene oder einstellbare Temperatur erreicht wird,
wobei ein zu dem Kühlventil (3) in Reihe geschaltetes Niveauregelventil (2) den weiteren Kaltwasser-Zulauf dann unterbricht, wenn der Speicher (6) voll ist und mit dem Wasser im Absorber (5) oben über den Absorberauslauf (14) und unten über einen Rückflußverhinderer (7) kommuniziert,
wobei der Rückflußverhinderer (7) gewährleistet, daß Kaltwasser nicht direkt in den Speicher (6) eintritt und bei Abkühlung des Absorbers (5) eine Rückzirkulation aus diesem in den Speicher (6) nicht erfolgt,
daß die geodätisch höchste Stelle des Speichers (6) mit einer Entlüftung (8) versehen ist, so daß im Absorber (5) aus dem Wasser austretende Gase abführbar sind und daß bei Befüllung durch den Absorber (5) oder Entleerung durch einen an der tiefsten Stelle des Speichers (6) angebrachten Warmwasser-Auslauf (9) Luft ab- bzw. zuströmen kann.

3. Solarer Warmwasserbereiter nach Anspruch 1 oder 2, dadurch gekennzeichnet, daß das thermostatisch geregelte Ventil (3) unmittelbar vor dem Absorbereinlauf (13) in der Verbindungsleitung zwischen Speicher (6) und Absorber (5) angeordnet ist, so daß der Rückflußverhinderer (7) mit Druck beaufschlagbar und eine bessere Dichtfunktion während des Befüllungsvorgangs des Speichers (6) gewährleistet.

4. Solarer Warmwasserbereiter nach einem der Ansprüche 1 bis 3, dadurch gekennzeichnet, daß das thermostatisch geregelte Ventil (3) am Absorberauslauf (14) angeordnet ist.

5. Solarer Warmwasserbereiter nach einem der Ansprüche 1 bis 4, dadurch gekennzeichnet, daß anstelle des im Speicher (6) angeordneten Niveaureglers (2) eine Druckreduzierung (19) am Kaltwassereinlauf (1) in Form eines Niveaureglers angeordnet ist, der das Wasserniveau immer unter dem Entlüftungsniveau hält.

6. Solarer Warmwasserbereiter nach einem der vorhergehenden Ansprüche, dadurch gekennzeichnet, daß anstelle des zwischen Speicher (6) und Absorbereinlauf (13) geschalteten Rückflußverhinderers (7) ein mit einer Entlüftung (16) versehener Überlauf (15), der über dem Absorberauslauf (14) und unter dem Schaltniveau des Niveaureglers (2) liegen muß, vorgesehen ist, so daß kaltes Wasser nicht direkt in den Speicher (6) einströmen kann.

7. Solarer Warmwasserbereiter nach einem der vorhergehenden Ansprüche, dadurch gekennzeichnet, daß der Speicher (6) in mindestens zwei Tanks (a, b,..) unterteilt ist, die mit dem Speicher (6) den Boden gemeinsam haben und die durch eine Siphonverschaltung so miteinander verbunden sind, daß die Tanks nacheinander befüllbar und in umgekehrter Reihenfolge entleerbar sind,
daß der Rücklauf zum Absorber (5) vom zuletzt befüllten Tank erfolgt und daß der Absorberauslauf (14) mit einer Entlüftung (17) versehen ist.

8. Solarer Warmwasserbereiter nach einem der Ansprüche 1 bis 6, dadurch gekennzeichnet, daß der Speicher (6) in mindestens zwei ineinander geschachtelte Tanks (a, b,..) unterteilt ist, die durch eine Siphonverschaltung so miteinander verbunden sind, daß die Tanks (a, b,..) nacheinander befüllbar und in umgekehrter Reihenfolge entleerbar sind,
daß der Rücklauf zum Absorber (5) vom zuletzt befüllten Tank erfolgt und daß der Absorberauslauf (14) mit einer Entlüftung (17) versehen ist.

9. Solarer Warmwasserbereiter nach einem der Ansprüche 1 bis 6, dadurch gekennzeichnet, daß der Speicher (6) als sackförmiger Tank ausgebildet ist, der sich beim Befüllen aufbläht und beim Entleeren zusammenfällt.

10. Solarer Warmwasserbereiter nach einem der Ansprüche 1 bis 9, dadurch gekennzeichnet, daß im Speicher (6) ein zweiter Niveauregler (20) vorgesehen ist, der ein Ventil (21) eines Zweigs des Kaltwasserzulaufs (1) öffnet, wenn das Wasser im Speicher unter ein bestimmtes Niedrigniveau abgesunken ist, wobei diese Wasserzufuhr direkt in den Speicher (6) oder via Absorber (5) erfolgt, und
daß in dem vom Niveauregler (20) bestimmten Mindstwasservolumen eine thermostatisch geregelte Wärmequelle (18) vorgesehen ist, welche die Temperatur des Wassers im Speicher (6) auf einem bestimmten Wert hält.

11. Solarer Warmwasserbereiter nach einem der Ansprüche 1 bis 9, dadurch gekennzeichnet, daß hinter dem Warmwasserauslauf (9) ein Durchlauferhitzer oder konventioneller Warmwasserspeicher angeordnet ist, der das Wasser auf die gewünschte Temperatur aufheizt, wobei im Speicher (6) ein Niveauwächter (22) vorgesehen ist, der bewirkt, daß bei leerem Speicher (6) Kaltwasser direkt vom Wasserzulauf (1) zum Wasserauslauf (9) bzw. hinter eine Druckerhöhungspumpe (23) gelangen kann, so daß in diesem Falle keine Druckreduzierung erfolgt.

12. Solarer Warmwasserbereiter nach Anspruch 11, dadurch gekennzeichnet, daß der Warmwasserauslauf (9) bzw. die Druckerhöhungspumpe (23) über einen Dreiwegehahn (24) mit einem zweiten, gewünschtenfalls konventionellen Warmwasserbereiter verbunden ist,
daß ein Niveauwächter (22) Schaltsignale an den Dreiwegehahn (24), die gegebenenfalls eingesetzte Druckerhöhungspumpe (23) und eine konventionelle Warmwasserbereitung gibt, und bei nicht leerem Speicher (6) den Hahn so einstellt, daß Wasser aus dem Speicher (6) in das Warmwassernetz fließt und bei leerem Speicher (6) die gegebenenfalls eingesetzte Druckerhöhungspumpe (23) abstellt, den Hann in die Stellung bringt, in der der zweite Warmwasserbereiter Wasser ins Warmwassernetz einspeist und den zweiten Warmwasserbereiter in Betrieb setzt.

13. Solarer Warmwasserbereiter nach einem der vorhergehenden Ansprüche, dadurch gekennzeichnet, daß bei geneigt angeordnetem Warmwasserbereiter der bzw. die Niveauregler sowie Rückflußverhinderer so angeordnet sind, daß sie auch in geneigter Position des Warmwasserbereiters funktionieren.

14. Solarer Warmwasserbereiter nach einem der vorhergehenden Ansprüche, dadurch gekennzeichnet, daß zur Bereitstellung von Druck-Warmwasser eine Druckerhöhungspumpe (23) hinter dem Warmwasserauslauf (9) angeordnet ist.
